Europäisches Patentamt

European Patent Office

Office européen des brevets

(19)

(11) Publication number : **0 453 209 A1**

## (12) EUROPEAN PATENT APPLICATION

(21) Application number : 91303299.1

(22) Date of filing : 15.04.91

(51) Int. Cl.⁵ : **B01J 8/44, B01J 8/24**

(30) Priority : 17.04.90 JP 99361/90

(43) Date of publication of application :
**23.10.91 Bulletin 91/43**

(84) Designated Contracting States :
**DE FR GB**

(71) Applicant : **MITSUI TOATSU CHEMICALS, Inc.**
**2-5 Kasumigaseki 3-chome**
**Chiyoda-Ku Tokyo 100 (JP)**

(72) Inventor : **Tokunaga, Naobi**
**137-2, Shirakanemachi**
**Ohmuta-shi, Fukuoka-ken (JP)**

Inventor : Takenaka, Shinji
104 Shirakanemachi
Ohmuta-shi, Fukuoka-ken (JP)
Inventor : Ajioka, Masanobu
1172-3, Kamikuratacho, Totsuka-ku
Yokohama-shi, Kanagawa-ken (JP)
Inventor : Kono, Yoshitsugu
58 Shozanmachi
Ohmuta-shi, Fukuoka-ken (JP)
Inventor : Itoh, Hiroyuki
300 Hirabarumachi
Ohmuta-shi, Fukuoka-ken (JP)
Inventor : Kikuchi, Isao
155 Shirakanemachi
Ohmuta-shi, Fukuoka-ken (JP)

(74) Representative : **Stuart, Ian Alexander et al**
**MEWBURN ELLIS 2 Cursitor Street**
**London EC4A 1BQ (GB)**

(54) Gas distributor used for gas-solid fluidized bed equipment.

(57) A gas distributor for fluidization equipment comprises a perforated base plate (1) and a number of nozzle tubes (3) underneath and in direct communication with the gas distributor plate to connect the inside and outside of the fluidized bed, said nozzle tubes being fitted with underneath retention plates (4) large enough to catch the solid flowing through the nozzle tubes when the gas is shut off ; each retention plate being horizontally mounted downward from a nozzle tube on a suspending means (5). The ratio of the diameter of the base plate to the length of the nozzle taken is 1 :1 to 20 :1, preferably 5 :1 to 15 :1.

# F I G.1

EP 0 453 209 A1

The present invention relates to a fluidized bed apparatus and a process for using same, and in particular to a gas distributor plate to be used for consistently maintaining a fluidized state.

Fluidized bed equipment has been utilized for combustion furnaces and reactors in various fields. The equipment generally comprises a vessel fitted at the bottom with gas distributor plate which is generally a plate having gas introducing holes. Gas is fed to the vessel through the holes in the above-mentioned gas distributor plate, solid particles are charged into the vessel, and a gas-solid fluidized bed is formed therein. The fluidization equipment must be able to maintain a steady fluidized state, and to satisfy this requirement various designs have been proposed.

In particular, it is preferred that the gas distributor plate, in order to provide satisfactory fluidization of solid particles, be provided with a large number of gas introducing holes having a small diameter to form a fluidized bed so as to uniformly disperse the fine solid particles in the gas.

In the actual production of such equipment, however, problems relating to the materials which can be used for the scale up of the equipment and problems stemming from the clogging of the gas introduction holes by the solid particles must be considered. As a general countermeasure, holes having a diameter larger than the size of solid particles have been used. Consequently, when the gas is stopped, the solid particles drop out of the vessel through the gas introduction holes, and complex procedures are required for the resumption of gas introduction.

As a technique for preventing the drop of the solid particles, the gas introduction holes are equipped with ball valves or capped valves, or provided with upwardly spaced caps. However, equipment employing these devices are subject to destruction by mechanical impact and are liable to cause trouble in operation. Also, with such equipment, a uniform dispersion of the solid particles is difficult to obtain and a high rate of gas flow tends to cause erosion of the equipment by the whirling solid particles.

In order to overcome these disadvantages, several modifications have been proposed: mounting of a suspended plate beneath the gas introduction holes [Japanese Patent Publication 29743 (1964)]; use of double floors to avoid overlapping of the gas introduction holes [Japanese Patent Publication 8263 (1955)], and parallel installation of two gas distributor plates having a plurality uniformly arranged holes and mounting of side-pierced caps on the holes of the lower plate [Japanese patent Publication 17801(1964)].

When using such modified apparatuses, after the gas introduction is stopped, it is intended that the solid particles drop through the gas introduction hole to deposit conically on the lower dispersing plate or cap, and that any further drop of these particles be inhibited. These modifications, however, have various problems in operation.

Furthermore, the fluidization equipment is required to introduce gas at a sufficiently high flow rate in order to maintain a well fluidized state. In the case of high temperature operation or in the presence of highly abrasive solid particles, erosion is liable to occur in the vicinity of the gas introduction holes due to contact of the solid particles with the edges of the gas introduction holes. Thus steady state operation for a long period cannot be expected on an industrial scale.

In order to solve the problems of erosion, it would be desirable to reduce the gas flow rate. On the other hand, a lower gas velocity would diminish the extent of fluidization in the reaction vessel and adversely affect the reaction.

Another method for overcoming the problem is to use abrasion resistant materials for the equipment. These materials, however, are often subject to deterioration under severe reaction conditions.

The present inventors have focused attention on the gas flow rate in the introduction hole when the solid particles begin to drop through the hole and have carried out an intensive investigation on the relationship between the gas flow rate in the hole and internal diameter of the hole and on the effect of fitting the hole with a nozzle having the same internal diameter as the hole.

As a result, the inventors have found that, when the nozzle tube is connected with the hole, the limiting gas flow rate in the nozzle tube which initiates the dropping of the solid particles into the hole (hereinafter referred to as "critical flow rate") is not significantly affected by the internal diameter of the nozzle tube. They have also found that the length of the nozzle tube bears a certain relationship to the critical flow rate and that connection of the gas introduction hole with the nozzle tube can reduce the gas flow rate to about one tenth as compared with the conventional case of the hole alone. The present invention has been completed based on these results. With preferred embodiments, erosion of the gas introduction hole and the nozzle tube is substantially eliminated and a consistently fluidized state can be maintained on an industrial scale.

Desirably there is provided a solid particle retention plate suspended downwardly from the bottom opening portion of the nozzle tube to prevent the solid particles from dropping further, and thereby operation of the fluidized bed equipment can be very smoothly carried out at the start, stop and resumption of the equipment.

Accordingly, one type of embodiment of the present invention comprises a gas distributor plate used for gas-solid fluidized bed equipment wherein solid particles are charged into a vessel equipped with said dispers-

2

ing plate at the bottom, and gas is introduced through said dispersing plate into the vessel to form a gas-solid fluidized bed in the vessel, said dispersing plate comprising a certain number of nozzle tubes which extend underneath the gas distributor plate to connect the inside and outside of that part of the vessel containing the fluidized bed. The nozzle tubes are preferably fitted with a retention plate covering the whole area surrounded by a bottom edge of a circular truncated cone which has a top edge constituted by the lower end of the internal perimeter of the nozzle tube and is formed by a downwardly extending side-face inclined to the horizontal plane at an angle which is substantially the same as the angle of repose of the solid particle deposit formed by a gravitational pull. Said retention plate is advantageously horizontally mounted downwardly from the bottom of the nozzle tube affixed to the gas distributor plate through suspending means and is arranged so as to permit the gas to be fed into the vessel by way of the nozzle tube.

In a second aspect an embodiment may provide a gas distributor plate used for gas-solid fluidized bed equipment wherein solid particles are charged into a vessel equipped with said gas distributor plate at the bottom and gas is introduced through said gas distributor plate into the vessel to form a gas-solid fluidized bed in the vessel, said gas distributor plate comprising having a certain number of nozzle tube which extend underneath the gas distributor plate to connect the inside and outside of that part of the vessel containing the fluidized bed. The nozzle tubes are preferably fitted with a retention plate covering the whole area surrounded by a bottom edge of a circular truncated cone which has a top edge constituted by the lower end of the internal perimeter of the nozzle tube and is formed by a downwardly extending side-face inclined to the horizontal plane at an angle which is substantially the same as the angle of repose angle of the solid particle deposit formed by a gravitational pull. Said retention plate is advantageouly horizontally mounted downwardly from the bottom of the nozzle tube affixed to the bottom of the nozzle tube through suspending means and is arranged so as to permit the gas to be fed into the vessel by way of the nozzle tube.

A preferred embodiment of the present invention comprises a gas distributor plate having a ratio of gas distributor plate diameter to nozzle length in the range of from 1:1 to 20:1.

Some embodiments of the invention will now be described with reference to the accompanying drawings, in which:

Figure 1 is a partly enlarged sectional view of a gas distributor plate illustrating an embodiment of the invention.

Figure 2 is a partly enlarged sectional view of a gas distributor plate illustrating the state of the equipment just after the gas flow has been stopped.

Figure 3 is a flow diagram illustrating the fluidized bed equipment.

Figure 4 is a graph illustrating the relation slip of the nozzle tube length and internal diameter of a nozzle tube to the critical gas flow below which solid particles fall into the nozzle tube, for a gas distributor plate having a diameter of 100 mm.

Figure 5 is a partly enlarged sectional view of a gas distributor plate illustrating another embodiment of the invention.

The present invention will hereinafter be illustrated in detail by reference to the drawings.

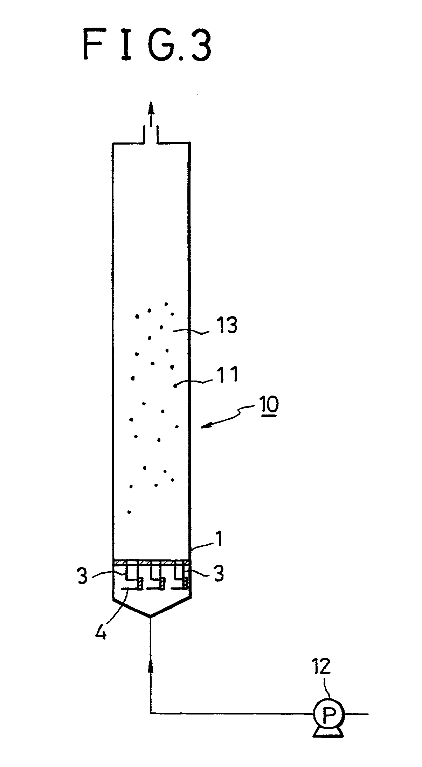

Figure 3 illustrates an example of fluidized bed equipment comprising a reaction vessel 10 containing solid particle 11 in the interior. On the bottom of the reaction vessel 10, then a mounted a gas distributor plate 1 having a certain number (three in the example) of nozzle tubes 3. Gas is blown by an air pump 12, fed to the bottom portion, i.e. a plenum, of the above mentioned reaction vessel 10, passed through nozzle tubes 3 on the above mentioned gas distributor plate 1, and transferred to the reaction zone 13 in the reaction vessel 10. Solid particles 11 are fluidized in the vessel 10 by the gas flow; thereby forming a fluidized bed in the reaction zone 13.

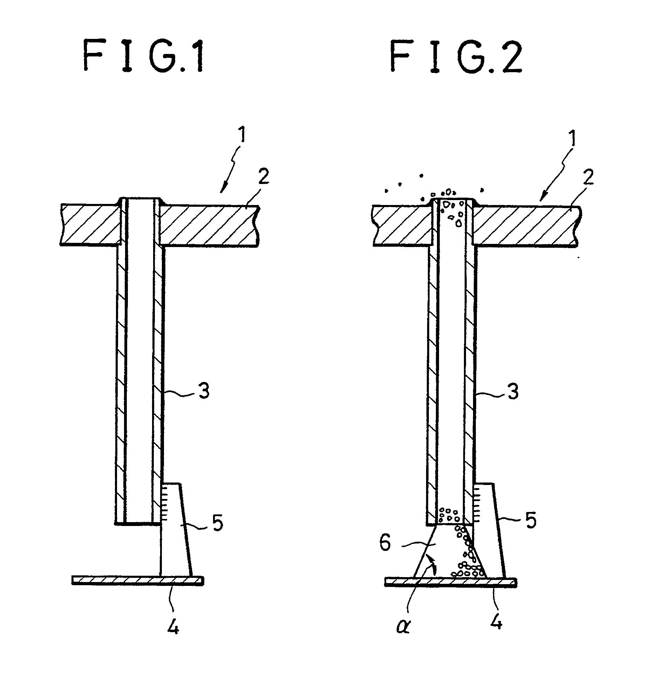

Figure 1 is a partly enlarged sectional view of the above mentioned gas distributor plate 1. In Figure 1, 2 is the base of the gas distributor plate and a certain number of the nozzle tubes 3 penetrates the base 2 and extends underneath the base 2.

Under each nozzle tube, a retention plate 4 is respectively suspended with a supporting bar 5, i.e., a suspending means, from the nozzle tube 3 while maintaining the retention plate surface parallel to the base 2. When the operation is stopped, the solid particles drop through the nozzle tube 3 onto the retention plate 4 by the gravity and deposit to form a cone 6 as illustrated in Figure 2. For example, solid particles having a diameter of from 20 to 100 μm form a repose angle α of from 30 to 40 degrees.

The minimum required area of the retention plate 4 which prevents the solid particles from falling-off from the retention plate 4 is determined by the distance from the lower end of the nozzle tube 3 to the retention plate 4, assuming that the kind of the solid particles and the internal diameter of the nozzle tube 3 are constant.

Consequently, the size of the retention plate 4 is larger than the minimum area required for preventing fall-off of the solid particles. That is, the retention plate 4 is required to cover the whole area surrounded by a bottom edge of a circular truncated cone which has a top edge constituted by the lower end of internal perimeter of the nozzle tube 3 and is formed by a downwardly extending side-face inclined to the horizontal plane with a repose angle of a solid particle deposit formed by gravity drop. On the other hand, the size of the retention plates 4 should not be excessively large in order to avoid overlapping with each other.

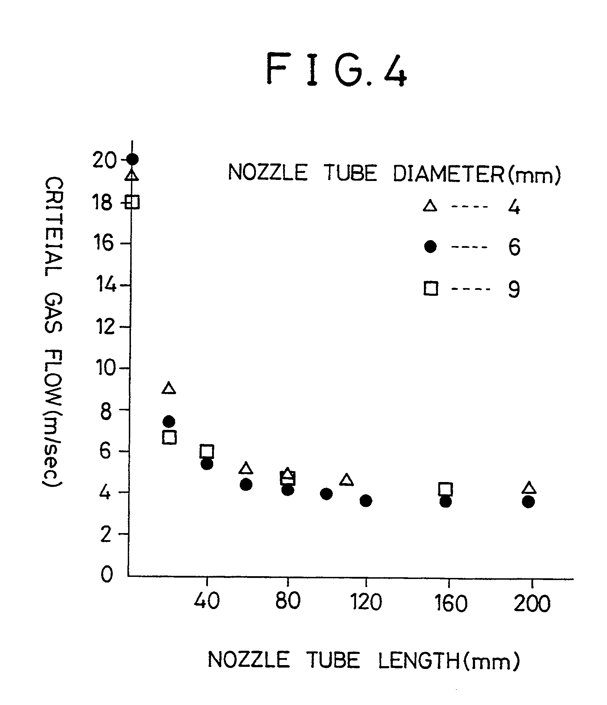

The present invention has a major advantage insofar as a lower gas flow rate can be used by passing the gas through the nozzle tubes mounted on the gas distributor plate. The critical flow rate, i.e., the gas flow rate in the nozzle tube wherein the solid particles start to fall-off is not significantly influenced by the internal diameter of the nozzle tube 3. For example, in the case of using a gas distributor plate having a diameter of 100 mm as illustrated in Figure 4, the same length of the nozzle tube indicates almost equal critical flow rates, even though the internal diameter of the nozzle tubes are varied from 4 to 9 mm. Conversely, the critical flow rate depends greatly upon the length of the nozzle tube. When the nozzle tube length is less than 20 mm, the critical flow rate is very high. Using a tube length of 20 mm or more, a low flow rate of from 4 to 6 mm/sec can be used, and hence erosion due to high flow rates can be prevented.

Consequently, the ratio of the diameter of the gas distributor plate to the length of the nozzle tube is in the range of from 1:1 to 20:1, preferably from 5:1 to 15:1. Otherwise, no particular limitation is imposed in the invention upon the diameter of the gas distributor plate, length of the nozzle tube, and the internal diameter of the nozzle tube. These values will be determined by engineering considerations on a case by case basis.

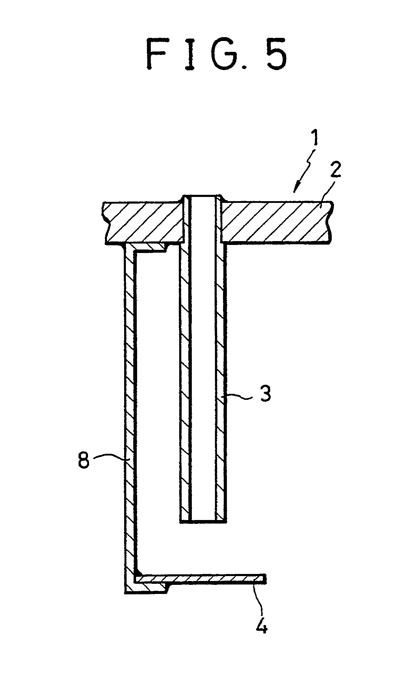

In the above mentioned example, three nozzle tubes 3 are mounted on the gas distributor plate 1. However, the number of the nozzle tubes is not limited and many nozzle tubes can be mounted depending upon the diameter of the gas distributor plate 1. The retention plate 4 is suspended to the nozzle tube 3 through the supporting bar 5. The retention plate can also be connected with the base 2 of the dispersing plate by any suitable suspending means 8 as being shown in Figure 5.

The nozzle tube is generally made of a circular tube. No restriction, however, is put on the crosses section of the nozzle tube and tubes having arbitrary cross sections can be used.

As mentioned above, remarkably decreased gas flow rates in the hole can be used by mounting a nozzle tube on the gas distributor plate. The invention also provides a retention plate having a size which can maintain the angle of repose of the deposited solid particles at the nozzle tube opening. Thus the start, stop and resumption of the equipment can be smoothly by carried out under low flow rate.

Consequently, the erosion problem can be solved, steady state operation for a long period can be accomplished, and energy saving can be achieved, all highly important advantages on an industrial scale.

## Description of the Preferred Embodiments

The present invention will hereinafter be illustrated in detail by way of examples and comparative examples. However, these examples are not to be construed to limit the scope of the invention.

## Example 1

A transparent acrylic cylinder having an internal diameter of 100 mm and a length of 2000 mm was used for fluidized bed equipment. The cylinder had an air introduction port at the bottom end and was equipped with a gas distributor plate at a position 250 mm higher than the bottom end. The gas distributor plate had a diameter of 100 mm and a thickness of 5 mm. A hole having a diameter of 3 mm was drilled at the center of the gas distributor plate and fitted on the underside of the plate with a nozzle tube having the same internal diameter as the hole and a length of 20 mm. In addition, a circular retention plate having a diameter of 80 mm was horizontally mounted at a position 25 mm lower than the bottom end of the nozzle tube on a supporting bar which is fixed on the nozzle tube.

From the top of the above mentioned fluidized bed equipment, 500 g of solid particles having a bulk density of 1.3 and an average diameter of 60 μm are charged. By controlling the air flow rate, the critical flow rate at which the solid particles begin to fall down through the nozzle tube was measured and found to be a value of 7.5 m/sec.

When the air flow was stopped, the solid particles fell down from to bottom end of the nozzle tube, were deposited on the retention plate, and clogged the nozzle tube; the residual solid particles remained on the gas distributor plate. The solid particles deposited on the retention plate had an angle of repose α of 32 degrees.

When the air flow was resumed, the solid particles on the retention plate were passed upwardly through the nozzle tube with air, returned to the upside of the gas distributor plate and fluidized again.

## Examples 2-16

The critical flow rate of solid particles were measured by carrying out the same procedures as described in Example 1 except that the internal diameter of the nozzle tube on the dispersing plate was changed in the range of from 4 to 9 mm, and the length of the nozzle tube was changed in the range of from 20 to 200 mm.

Comparative Examples 1-3

A dispersing plate equipped with a gas introduction hole having a diameter in the range of from 4 to 9 mm was used without mounting a nozzle tube.

The same procedures as described in Example 1 were carried out.

Results obtained in Examples 1-16 and Comparative Examples 1-3 are illustrated in Figure 4, and tabulated as follows:

|  |  | Tube Length (mm) | Tube Diameter (mm) | Critical Gas Flow Rate (m/sec) |
|---|---|---|---|---|
| Example | 1 | 20 | 3 | 7.5 |
|  | 2 | 20 | 4 | 9.0 |
|  | 3 | 20 | 6 | 7.5 |
|  | 4 | 20 | 9 | 6.5 |
|  | 5 | 40 | 4 | 6.0 |
|  | 6 | 40 | 6 | 5.0 |
|  | 7 | 60 | 4 | 5.0 |
|  | 8 | 60 | 6 | 4.5 |
|  | 9 | 80 | 4 | 5.0 |
|  | 10 | 80 | 6 | 4.5 |
|  | 11 | 100 | 6 | 4.0 |
|  | 12 | 110 | 4 | 4.5 |
|  | 13 | 120 | 6 | 4.0 |
|  | 14 | 160 | 6 | 3.5 |
|  | 15 | 160 | 9 | 4.5 |
|  | 16 | 200 | 6 | 4.0 |
| Comparative | 1 | 0 | 4 | 19.5 |
|  | 2 | 0 | 6 | 20.0 |
|  | 3 | 0 | 9 | 18.0 |

## Claims

1. Gas-solid fluidized bed apparatus comprising a vessel (10) equipped with a bottom plenum, a horizontally-extending gas distributor plate (1) in a lower region of said vessel above said plenum for permitting gas to be introduced through said gas distributor plate into the vessel to form a gas-solid fluidized bed in the vessel, said gas distributor plate comprising a horizontal base (2) provided with a plurality of holes for the introduction of said gas; nozzle tubes (3) extending downwardly underneath of the base and in communication with the holes to connect the plenum with the space above said gas distributor plate, said nozzle tubes being provided with retention plates (4) horizontally mounted below the nozzle tubes, said retention plates having a larger diameter than said internal diameter of nozzle tubes.

2. Apparatus according to claim 1 wherein said retention plates are connected with respective nozzle tubes.

3. Apparatus according to claim 1 or 2 wherein said plate (1) is disc-shaped.

4. Apparatus according to any preceding claim wherein the ratio of the diameter of the gas distributor plate to the length of the nozzle tube is in the range of from 1:1 to 20:1.

5. Apparatus according to claim 4 wherein said ratio is from 5:1 to 15:1.

6. A gas distributor plate assembly for use in apparatus according to any preceding claim comprising a said gas distributor plate (1) connected to said nozzle tubes (3).

7. An assembly according to claim 6 further including said retention plates (4) mounted below the nozzle tubes.

8. A process for fluidizing particulate solids comprising charging said particulate solids into a vessel and passing gas into a bottom plenum in the vessel and upwardly through a gas distributor to form a fluidized bed with the particulate solids, and wherein the process is conducted in apparatus according to any of claims 1, to 5 whereby a lower critical rate of gas flow through the gas distributor is realized than would be the case with a gas distributor without said nozzles.

9. A process according to claim 8 wherein the retention plates are located and dimensioned so that each plate covers the whole area surrounded by a bottom edge of a circular truncated cone which has a top edge constituted by the lower end of the internal perimeter of the nozzle tube and is formed by a downwardly extending side-face inclined to the horizontal plane at an angle which is substantially the same as the angle of repose angle of the solid particle deposit formed by a gravitational pull.

# FIG.1

# FIG.2

# F I G.3

# F I G. 4

NOZZLE TUBE DIAMETER(mm)

△ ---- 4

● ---- 6

□ ---- 9

CRITEIAL GAS FLOW(m/sec)

NOZZLE TUBE LENGTH(mm)

# F I G. 5

## EUROPEAN SEARCH REPORT

European Patent Office

Application Number

EP 91 30 3299

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-9 001 988 (A. AHLSTROM CORP.)<br>* Abstract; page 1, paragraphs 1,2; page 10, paragraphs 2,3; page 11, paragraph 3; figures 1,2 * | 1,2 | B 01 J  8/44<br>B 01 J  8/24 |
| A | | 6,7 | |
| Y | FR-A-1 182 352 (CHARBONNAGES DE FRANCE)<br>* Page 1, paragraph 1; page 4, lines 13-17; figure 9 * | 1,2 | |
| A | | 3,8,9 | |
| A | GB-A-1 119 250 (THE UNITED STEEL CO.)<br>* Page 2, lines 13-29; figure 1 * | 1 | |
| | | | **TECHNICAL FIELDS SEARCHED (Int. Cl.5)**<br><br>B 01 J<br>F 23 C<br>F 26 B |

The present search report has been drawn up for all claims

| Place of search | Date of completion of the search | Examiner |
|---|---|---|
| THE HAGUE | 25-07-1991 | SIEM T.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)